(19) Europäisches Patentamt
European Patent Office
Office européen des brevets

(11) **EP 3 566 802 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **19167914.1**

(22) Anmeldetag: **08.04.2019**

(51) Internationale Patentklassifikation (IPC):
**B23C 5/00** *(2006.01)* **B23C 5/04** *(2006.01)*

(52) Gemeinsame Patentklassifikation (CPC):
**B23C 5/006; B23C 5/04;** B23C 2222/64;
B23C 2222/88; B23C 2226/27; B23C 2250/12

(54) **ROTATIONSWERKZEUG**

ROTARY TOOL

OUTIL DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2018 DE 102018108765**

(43) Veröffentlichungstag der Anmeldung:
**13.11.2019 Patentblatt 2019/46**

(73) Patentinhaber: **GÜHRING KG**
**72458 Albstadt (DE)**

(72) Erfinder: **HÄNLE, Dr. Peter**
**Wales, WI Wisconsin 53183 (US)**

(74) Vertreter: **Winter, Brandl - Partnerschaft mbB**
**Alois-Steinecker-Straße 22**
**85354 Freising (DE)**

(56) Entgegenhaltungen:
WO-A2-2017/177990    DE-C- 925 142
US-A- 5 605 420    US-A1- 2014 161 543

## Beschreibung

### Technisches Gebiet

Die vorliegende Erfindung betrifft ein Rotationswerkzeug gemäß dem Oberbegriff des Patentanspruchs 1, zur spanenden Bearbeitung von großen Innendurchmessern, an dessen Außenumfang zumindest eine Schneide angeordnet ist, mit einer Trägerstruktur, welche einen tragenden Bereich aufweist, der die Schneide mittelbar oder unmittelbar trägt, und einem Spannabschnitt zur Ankopplung an eine Werkzeugaufnahme. Der Spannabschnitt kann dabei beliebig geformt sein, vorzugsweise eine solche Form haben, dass er über gängige Werkzeugaufnahmen, wie beispielsweise eine HSK-Aufnahme (Hohlschaftkegel-Aufnahme), an die entsprechende Spindel einer Werkzeugmaschine gekoppelt werden kann.

### Stand der Technik

Insbesondere durch den Umstand, dass immer mehr elektromotorische Antriebe oder konventionelle Getriebe mit höherer Gangzahl benötigt werden, stellt sich verschärft das Problem, große Innendurchmesser, wie beispielsweise den Innendurchmesser eines Statorgehäuses eines Elektromotors, spanabhebend mit hoher Präzision zu bearbeiten.
Für den Wirkungsgrad eines Elektromotors ist aufgrund der Wechselwirkungen zwischen Rotor und Stator eine genaue Einhaltung vorgegebener geometrischer Maße von entscheidender Bedeutung. Es hat sich gezeigt, dass herkömmliche drehangetriebene Werkzeuge nur dann in der Lage sind, die geforderten engen Fertigungstoleranzen einzuhalten, wenn das Zerspanungsvolumen entsprechend klein gehalten wird, wie das beispielsweise bei einer Reibahle der Fall ist. Wenn allerdings der Materialabtrag gesteigert werden soll, um die Fertigung wirtschaftlicher zu gestalten, ergeben sich weitere Probleme:
Bei der spanenden Bearbeitung von großen Innendurchmessern mit entsprechend erhöhtem Materialabtrag und dementsprechend höheren, in das Werkzeug und das Werkstück eingebrachten Energien, erhitzen sich in die Schneiden selbst dann, wenn sie gekühlt werden, sehr stark. Diese Schneiden wiederum übertragen die Wärme über ihre Anbindung auf eine Trägerstruktur des Rotationswerkzeugs, selbiges gilt für Stütz- bzw. Führungsleisten am Werkzeugkörper, welche durch Reibung mit dem Werkstück ebenfalls Wärme in das Werkzeug übertragen. Da der Bearbeitungsvorgang aufgrund dessen, dass die zu bearbeitende Oberfläche recht groß ist, einige Zeit in Anspruch nimmt, erwärmt sich die Trägerstruktur und dehnt sich entsprechend Ihres Wärmeausdehnungskoeffizienten aus. Es kommt hinzu, dass das Rotationswerkzeug für Bearbeitung von großen Innendurchmessern ein beträchtliches Volumen erhält, so dass auch beachtet werden muss, dass sich das Gewicht des Werkzeugs nicht negativ auf die Maßhaltigkeit der Bearbeitung auswirkt. Ferner muss das Werkzeug auch vom automatischen Werkzeugwechsler der Bearbeitungsmaschine sicher gehandhabt werden können.
US 5,605,420 A offenbart ein Rotationswerkzeug gemäß dem Oberbegriff des Patentanspruchs 1, welches für einen Fräs-Einsatz mit Hochgeschwindigkeitsrotation angepasst ist. Das Rotationswerkzeug weist einen Spannabschnitt in Form einer HSK Aufnahme sowie einen scheibenförmigen Träger bzw. Trägerstruktur auf, an dessen Außenumfang Schneiden angeordnet sind. Im Bereich der Schneiden ist in einer radial äußeren Oberfläche der Trägerstruktur umfänglich eine Nut ausgebildet, in welche ein Band mit einer hohen Zugfestigkeit eingesetzt ist, um die Trägerstruktur gegenüber hohen Zentrifugalkräften zu stützen. Dieses Band kann als Material in Harz gebundene Kohlenstofffasern aufweisen.

### Zusammenfassung der Erfindung

Es ist daher die Aufgabe der Erfindung, ein Rotationswerkzeug insbesondere für die spanabhebende Herstellung von Bohrungen großer Durchmesser zur Verfügung zu stellen, das sich bei guter Handhabung dadurch auszeichnet, dass bislang nicht erreichte Maßhaltigkeiten der Bohrung auch dann erzielbar sind, wenn große Zerspanungsleistungen gefordert sind oder der Wärmeeintrag in das Werkzeug bei der Zerspanung eine hohe thermische Dehnung desselben bewirken würde.
Die Aufgabe wird durch ein Rotationswerkzeug gemäß dem Patentanspruch 1 gelöst. Die Trägerstruktur ist in Leicht-Bauweise ausgestaltet und der die Schneide mittelbar oder unmittelbar tragende Bereich der Trägerstruktur ist hinsichtlich einer thermischen Wärmeausdehnung durch eine Korsettstruktur beschränkt. Der tragende Bereich ist ein Abschnitt der Trägerstruktur in der Umgebung der Schneide, welcher diese mittelbar oder unmittelbar trägt und die an der Schneide bei einer spanenden Bearbeitung auftretenden Kräfte im Kraftfluss gesehen als vorgelagerter Bereich der Trägerstruktur aufnimmt. Der tragende Bereich und die Schneide sind gewissermaßen die Hauptelemente des Funktionsabschnitts des Rotationswerkzeugs. Dabei erfüllt die Trägerstruktur die Erfordernisse einer Leicht-Bauweise, um Gewicht und Trägheit bei einer rotierenden spanenden Bearbeitung gering zu halten, und einer möglichst kostengünstigen Herstellung. Bei einer Erwärmung aufgrund einer spanenden Bearbeitung dehnt sich die Trägerstruktur und insbesondere der tragende Bereich der Trägerstruktur aus. Erfindungsgemäß ist jedoch der die Schneide tragender Bereich, also der Bereich, welcher letztlich für die Maßhaltigkeit entscheidend ist, aufgrund der Korsettstruktur in seiner Ausdehnung beschränkt. Die Korsettstruktur weist dabei einen besonders niedrigen Wärmeausdehnungskoeffizienten auf, so dass eine Temperaturänderung nur zu einer sehr geringen Wärmedehnung bzw. geometrischen Änderung führt, welche sich innerhalb einer vorgegebenen Toleranz einer Maßhaltigkeit bewegen. Durch die Korsettstruktur wird insbesondere der Freiheitsgrad in radialer Richtung beschränkt und es gelingt so, eine thermisch bedingte Verschiebung der Schneiden in radialer Richtung im μm-Bereich zu halten bzw. auf wenige μm genau zu beschränken, selbst wenn eine Temperatur der Schneiden sehr hoch ist. Somit können Bauteile mit großem Innendurchmesser hochgenau zerspant werden.

Erfindungsgemäß ist die Korsettstruktur radial innerhalb der Trägerstruktur angeordnet und mit der Trägerstruktur verbunden, wobei die Korsettstruktur eine thermische Wärmeausdehnung des die Schneide tragenden Bereichs der Trägerstruktur vorgibt. Die im radial inneren Bereich angeordnete Korsettstruktur ist gegenüber einer Temperaturänderung mit einhergehenden Wärmedehnung (relativ gesehen) geometrisch invariant. Die radial außen angeordnete Trägerstruktur hingegen und insbesondere der tragende Bereich ist (relativ gesehen) geometrisch variant und ist bestrebt eine Wärmedehnung auszuführen, jedoch wird diese Wärmedehnung durch die radial innerhalb sitzende verbundenen Korsettstruktur durch Kraftschluss und/oder Formschluss beschränkt. Folglich gibt die Korsettstruktur die Wärmeausdehnung in radialer Richtung vor.

Vorteilhafte Ausführungsformen sind in den Unteransprüchen beansprucht und werden nachfolgend erläutert.

So ist es von Vorteil, wenn die Korsettstruktur einen (mittleren) Wärmeausdehnungskoeffizienten (in der Literatur auch als Längenausdehnungszahl / Ausdehnungskoeffizient oder Wärmeausdehnungsbeiwert bezeichnet) von

unter $10 \cdot 10^{-6} \frac{1}{K}$ (10E-6 1/K, 10x10$^A$(-6) 1/K), besonders bevorzugt von unter $7 \cdot 10^{-6} \frac{1}{K}$ und ganz besonders bevorzugt von unter $2 \cdot 10^{-6} \frac{1}{K}$ (2E-6 1/K), im Temperaturbereich von 0 bis 80°C und insbesondere im Temperaturbereich von 0 bis 100°C aufweist. Besonders bevorzugt, weist die Korsettstruktur auch im Temperaturbereich von 0 bis 300°C einen Wärmeausdehnungskoeffizienten von unter $2 \cdot 10^{-6} \frac{1}{K}$ auf. Durch den besonders geringen Wärmeausdehnungskoeffizienten der Korsettstruktur wird die geometrische Änderung des tragenden Bereichs in insbesondere radialer Richtung beschränkt.

Bevorzugt weist die Korsettstruktur als Material Invar und/oder Titan und/oder Nickel und/oder eine Nickel-Eisenlegierung und/oder einen Kohlenstofffaserverbund-Werkstoff und/oder Silizium-Nitrid (Si3N4) auf. Invar ist eine binäre Eisen-NickelLegierung mit einem besonders niedrigen Wärmeausdehnungskoeffizienten und ist auch unter der Bezeichnung Invar 36, Nilo alloy 36, Nilvar, Ni 36 oder NiLo36 bekannt. NiLo36 hat die Werkstoffnummer 1.3912. Selbst bis Temperaturen von 500°C bewegt sich sein Wärmeausdehnungskoeffizient unter $10 \cdot 10^{-6} \frac{1}{K}$. Gleichzeitig weist Invar eine Zugfestigkeit Rm von ca. $500 \frac{N}{mm^2}$ und ein E-Modul von ca. 140 GPa auf, um den Festigkeitsanforderungen des Rotationswerkzeugs zu genügen. Die Korsettstruktur kann ebenfalls Titan als Material aufweisen. Titan ist dehnbar sowie korrosions- und temperaturbeständig und weist mit einen Wärmeausdehnungskoeffizienten von $8,2 \cdot 10^{-6} \frac{1}{K}$ auf. Entsprechende Legierungen können Zugfestigkeiten Rm von teils weit über $800 \frac{N}{mm^2}$ erreichen. Daneben eignen sich auch weitere Nickellegierungen, wie beispielsweise Ni 47, als ein anteiliges Material der Korsettstruktur. Kohlenstofffaserverstärkter Kunststoff (CFK) eignet sich ebenso als Material für die Korsettstruktur mit richtungsabhängiger Wärmeausdehnung. Hierbei werden die Ausrichtungen der Kohlenstofffasern bei der Gestaltung der Korsettstruktur an die Erfordernisse angepasst, und insbesondere in radialer Richtung oder in Umfangsrichtung gelegt, so dass in Faserrichtung eine Wärmeausdehnung beschränkt wird.

In einer bevorzugten Ausführungsform kann die Korsettstruktur rotationssymmetrisch und/oder achsensymmetrisch zu einer Rotationsachse des Rotationswerkzeugs ausgebildet sein. Die rotationssymmetrische und/oder achsensymmetrische Ausbildung mit einhergehender gleichmäßiger Rotationsträgheit begünstigt ausgeglichene Drehbewegung des Rotationswerkzeugs sowie eine adäquate, gleichmäßige Kraftaufnahme in radialer Richtung über den gesamten Umfang.

Vorzugsweise kann die Trägerstruktur eine (mittlere) Dichte von unter $4 \frac{g}{cm^3}$ und/oder einen (mittleren) Wärmeausdehnungskoeffizienten von über $10 \cdot 10^{-6} \frac{1}{K}$ und besonders bevorzugt von über $15 \cdot 10^{-6} \frac{1}{K}$ im Temperaturbereich von 0 bis 100°C aufweisen. Die Trägerstruktur stellt volumenmäßig und damit auch gewichtsmäßig einen großen Anteil an dem Rotationswerkzeugs dar. Ein geringes Gewicht ist für eine gute Handhabung sowie einen effektiven Einsatz mit verbesserter Maßhaltigkeit notwendig, da die überlagerte wirkende Gewichtskraft verringert wird.

Vorzugsweise kann das Rotationswerkzeug dafür angepasst sein, einen Innendurchmesser von über 200mm, besonders bevorzugt von über 300mm, und ganz besonders bevorzugt von über 400mm zu bearbeiten. Derart große Innendurchmesser sind für beispielsweise Statorgehäuse von Elektromotoren von Bedeutung. Das erfindungsgemäße Rotationswerkzeug erfüllt trotz großer Innendurchmesser die bereits in der Einleitung beschrieben höchsten Ansprüche an die Präzision der zerspanenden Bearbeitung, welche aufgrund der hohen Drehzahlen des Elektromotors gestellt werden, um eine Hauptbohrung letztlich auf wenige μm genau im Durchmesser fertig zu bearbeiten.

In einer besonderen Ausführungsform kann das Rotationswerkzeug dafür angepasst sein, einen Innendurchmesser mit einer axialen Länge bis zu 400mm zu bearbeiten.

Insbesondere ist die Abmessung der Korsettstruktur in radialer Richtung um ein vielfaches, insbesondere um ein zwei- bis zwanzigfaches, größer als die Abmessung des die Schneide tragenden Bereichs, so dass insgesamt die Wärmeausdehnung, welche sich aus der Summe der Wärmeausdehnung der Korsettstruktur mit geringem Wärmeausdehnungskoeffizienten aber großer Abmessung und der Wärmeausdehnung des tragenden Bereichs mit hohem Wärmeausdehnungskoeffizienten aber geringer Abmessung zusammensetzt, minimiert wird. Die Wärmeausdehnung der Korsettstruktur trägt an der Gesamt-Wärmeausdehnung in radialer Richtung den maßgeblichen Anteil und gibt somit maßgeblich die Wärmeausdehnung der Trägerstruktur im Bereich der Schneide vor.

Grundsätzlich kann die Schneide auf verschiedenste Weise positioniert werden. Wenn das Material der Trägerstruktur bzw. des tragenden Bereichs geeignet ist, eine harte Schneide zu formen, kann die zumindest eine Schneide unmittelbar an dem tragenden Bereich der Trägerstruktur ausgebildet sein. Dadurch ist die Trägerstruktur mit der zumindest einen Schneiden einstückig und kostengünstig ausgebildet und eine Montage der Schneide an die Trägerstruktur entfällt. Die zumindest eine Schneide kann alternativ auch an einem von dem tragenden Bereich getragenen Schneidkörper ausgebildet sein. Der Schneidkörper bildet hierbei einen separaten Körper aus, welcher insbesondere austauschbar ist und ein gegenüber der Trägerstruktur unterschiedliches Material mit insbesondere erhöhter Härte aufweisen kann.

In einer vorteilhaften Ausführung kann der Schneidkörper, beispielsweise in der Form eines Schneideinsatzes, in einer axial und/oder radial einstellbaren Kassette gehalten sein. Die Kassette sitzt dabei insbesondere direkt auf dem tragenden Bereich bzw. ist in diesem eingebettet. Die Schneide des Schneidkörpers wird also mittelbar durch den tragenden Bereich getragen.

In einer bevorzugten Ausführungsform kann die Korsettstruktur eine bezüglich einer Rotationsachse des Rotationswerkzeugs scheibenförmige oder sternförmige Struktur aufweisen. Die scheibenförmige oder sternförmige Struktur, deren größte geometrische Abmessung senkrecht auf die Rotationsachse steht, kann Zug und/oder Druckkräfte in radialer Richtung aufnehmen und ermöglicht eine umfängliche, gleichmäßige Kraftaufnahme in radialer Richtung. Dehnt sich die Trägerstruktur aufgrund einer Temperaturänderung aus oder zieht sie sich zusammen, so wird sie durch die Zug- bzw. Druckkraft der Korsettstruktur in radialer Richtung (durch Kraft- und/oder Formschluss) beschränkt. Die sternförmige Struktur benötigt gegenüber der scheibenförmigen Struktur der Korsettstruktur weniger Material und ist somit leichter.

Wenn der die Schneide tragende Bereich über einen radialelastischen Verbindungsabschnitt an einen Grundkörper der Trägerstruktur angebunden ist, ergibt sich eine langlebige und dennoch steife Werkzeugstruktur. Entscheidend für die Maßhaltigkeit bei Temperaturänderungen ist die Position der Schneide in Bezug zu der Rotationsachse bzw. der durch die Schneide beschriebene rotatorische Schneidkreis. Dieser darf sich nur geringfügig innerhalb der Maßhaltigkeit bzw. innerhalb definierter Toleranzen ändern. Daher muss in einem definierten Maß eine Entkopplung des tragenden Bereichs mit den Schneiden und dem Grundkörper der Trägerstruktur gestaltet werden. Der Freiheitsgrad einer thermischen Ausdehnung des Grundkörpers in radialer Richtung wird, im Gegensatz zu dem tragenden Bereich, nicht beschränkt. Der tragende Bereich und der Grundkörper können bei Erwärmung jeweils eigenständig eine Wärmedehnung in radialer Richtung ausführen, wobei durch den radialelastischen Verbindungsabschnitt eine erzwungene Wärmedehnungsbehinderungsspannung abgebaut wird. Trotzdem hat es sich gezeigt, dass der radialelastische Verbindungsabschnitt sich nicht negativ auf eine spanende Bearbeitung auswirkt und eine steife Werkzeugstruktur weiterhin gegeben ist.

In einer bevorzugten Ausführungsform kann der Grundkörper der Trägerstruktur die Form eines Topfes haben und der radialelastische Verbindungsabschnitt der Trägerstruktur eine Innenumfangsnut und / oder eine Außenumfangsnut aufweisen. Der Grundkörper in Form eines Topfes, der vorzugsweise rotationssymmetrisch ausgestaltet ist, weist ein hohes Widerstandsmoment gegenüber einer Torsion auf und kann unter Einsparung nicht benötigten Materials mit einhergehender Gewichtsreduzierung für eine Drehmomentübertragung angepasst sein. Die Materialausnehmungen der Nut ermöglichen eine radialelastische Verformung des Verbindungsabschnitts. Bei mehr als einer Nut sind die zumindest eine Innenumfangsnut und/oder Außenumfangsnut zueinander in Axialrichtung der Rotationsachse des Rotationswerkzeugs versetzt. Durch die Festlegung von Anzahl und Anordnung der Nuten zueinander, lässt sich ein radialelastischer Verbindungsbereich entsprechend den Anforderungen des Rotationswerkzeugs gestalten. Insbesondere wechselt sich die zumindest eine Innenumfangsnut und die zumindest eine Außenumfangsnut in Axialrichtung ab, so dass eine W-Form bzw. sägezahnförmige Struktur entsteht.

Selbstverständlich ist die Trägerstruktur mit der Korsettstruktur radial fest zu verbinden. Hinsichtlich der Verbindungstechnik stehen alle gängigen Varianten zur Verfügung. Insbesondere kann auch eine integrale Verbindung gewählt werden, indem beispielsweise die Trägerstruktur auf die Korsettstruktur (oder umgekehrt) aufgedruckt wird. Neben einer kraftschlüssigen Verbindung oder einer formschlüssigen Verbindung kann also auch eine stoffschlüssige Verbindung durch beispielsweise Schweißen, Kleben oder Aufdrucken für die Verbindung von Korsettstruktur und Trägerstruktur herangezogen werden.

Vorzugsweise kann die Korsettstruktur über zumindest eine Schraubverbindung in radialer Richtung mit der Trägerstruktur verbunden sein, nämlich dann, wenn ein Schrumpfmaß geringer ist als die bei der Trägerstruktur im Werkzeugbetrieb auftretende Wärmeausdehnung. Die Schraubverbindung bzw. die Schrauben in radialer Richtung, vorzugsweise umfänglich gleichmäßig angeordnet, binden den die Schneide tragenden Bereich starr (form- und/oder kraftschlüssig) an die Korsettstruktur. Über die Schraubverbindung kann eine Zugkraft des tragenden Bereichs in radialer Richtung, welche aufgrund unterschiedlicher Wärmeausdehnungen von Korsettstruktur und Trägerstruktur auftritt, aufgenommen und die temperaturbedingte elastische Verformung des tragenden Bereichs beschränkt werden.

In einer bevorzugten Variante kann die Trägerstruktur auf die Korsettstruktur aufgeschrumpft sein. In dieser Variante wird die Trägerstruktur derart erhitzt oder elastisch verformt und aufgeweitet, dass der (größte Teil-)Innendurchmesser der Trägerstruktur größer oder gleich des (größten Teil-)Außendurchmessers der Korsettstruktur wird. Hiernach werden die beiden Strukturen miteinander montiert und verbunden. Der Zwang der elastischen Verformung wird zurückgenommen bzw. die Trägerstruktur wird wieder auf Raumtemperatur gebracht, so dass sich die Trägerstruktur gegenüber der Korsettstruktur verspannt und aufgeschrumpft ist. Zusätzlich oder alternativ kann auch die Korsettstruktur vor der Montage heruntergekühlt werden. Insbesondere wird bei einer Temperaturerhöhung von 25°C ca. 66% der Wärmedehnung der Trägerstruktur durch die Vorspannung im verspannten Bereich aufgenommen bzw. kompensiert.

Vorzugsweise sind in der Trägerstruktur Einstiche und/oder Nuten als Spannungskerben eingebracht, um Spannungen abzuleiten. Durch die Einstiche bzw. Nuten wird bei einer Erwärmung verhindert, dass eine resultierende Zugkraft eine maximal zulässige Zugkraft überschreitet.

## Kurzbeschreibung der Zeichnungen

Die Erfindung wird nachfolgend anhand bevorzugter Ausführungsbeispiele mit Hilfe von Figuren näher erläutert. Es zeigen:

Fig. 1 eine Längsschnittansicht eines erfindungsgemäßen Rotationswerkzeugs einer ersten bevorzugten Ausführungsform mit radial innenliegender Korsettstruktur,

Fig. 2 eine Vorderansicht eines vorderen Abschnitts des Rotationswerkzeugs aus Fig. 1,

Fig. 3 eine perspektivische Ansicht des längsgeschnittenen Rotationswerkzeugs der ersten bevorzugten Ausführungsform,

Fig. 4 eine Querschnittsansicht durch die Korsettstruktur und die Trägerstruktur des Rotationswerkzeugs der ersten bevorzugten Ausführungsform,

Fig. 5 ein Vergleich einer temperaturbedingten Ausdehnung von einem Rotationswerkzeug, bei dem radial innenliegend ein Aluminiumstern angeordnet ist, mit einem erfindungsgemäßen Rotationswerkzeug mit einer Korsettstruktur,

Fig. 6 eine perspektivische Ansicht eines erfindungsgemäßen Rotationswerkzeugs einer weiteren bevorzugten Ausführungsform,

Fig. 7 eine schematische Längsschnittansicht eines Rotationswerkzeugs einer weiterenbevorzugten Ausführungsform,

Fig. 8 eine schematische Querschnittsansicht des Rotationswerkzeugs aus Fig. 7,

Fig. 9 eine schematische Längsschnittansicht eines Rotationswerkzeugs einer weiterenbevorzugten Ausführungsform,

Fig. 10 eine schematische Querschnittsansicht des Rotationswerkzeugs aus Fig. 9, und

Fign. 11 & 12 einen Vergleich einer temperaturbedingten Ausdehnung von einem Rotationswerkzeug, bei dem radial innenliegend ein Aluminiumrad angeordnet ist, mit dem Rotationswerkzeug einer weiteren Ausführungsform mit einer Korsettstruktur aus Invar.

Die Figuren sind schematischer Natur und sollen nur dem Verständnis der Erfindung dienen. Gleiche Elemente sind mit denselben Bezugszeichen versehen. Die Merkmale der verschiedenen Ausführungsbeispiele können untereinander ausgetauscht werden.

**Detaillierte Beschreibung bevorzugter Ausführungsformen**

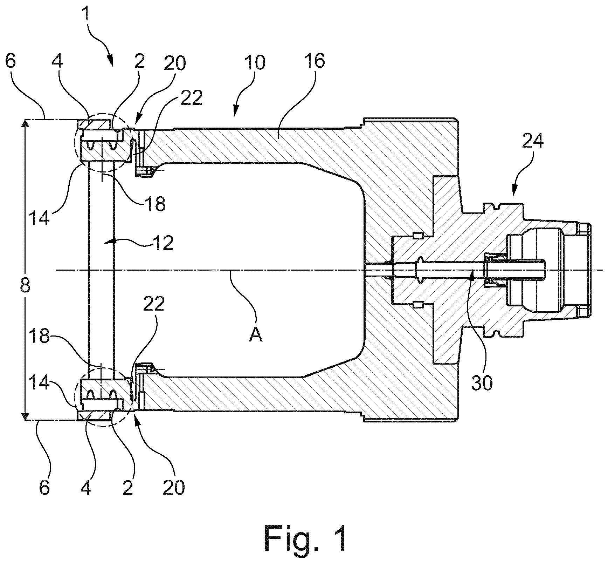

Figur 1 zeigt ein erfindungsgemäßes Rotationswerkzeug 1 einer ersten bevorzugten Ausführungsform in einer längsgeschnittenen Ansicht. Das drehangetriebene Rotationswerkzeug dieser Variante ist rotationssymmetrisch um eine Rotationsachse A ausgestaltet und dient der hochpräzisen spanenden Bearbeitung von insbesondere metallischen Bauteilen, Bauteilen aus Kunststoff oder Bauteilen aus Faserverbundmaterialien. An einem Außenumfang 2 des Rotationswerkzeugs 1 sitzen hierfür umfänglich Schneiden 4, welche bei einer Rotation des Rotationswerkzeugs um die Rotationsachse A Material von einem zu bearbeitenden Werkstück (nicht dargestellt) spanend abtragen. Radial außenliegende Spitzen der Schneiden 4 an dem Außenumfang 2 beschreiben bei Rotation um die Rotationsachse A dabei einen kreisrunden Schneidkreis 6 mit einem zugehörigen Schneidkreis-Durchmesser 8. Dieser Schneidkreis-Durchmesser 8 bestimmt letztlich den resultierenden Innendurchmesser eines zu bearbeitenden Werkstücks.

Das Rotationswerkzeug 1 ist für große Innendurchmesser, beispielsweise den Innendurchmesser eines Statorgehäuses, ausgelegt. In dieser Ausführungsform weist das Rotationswerkzeug 1 einen Schneidkreis-Durchmesser 8 von 300mm auf. Ebenfalls ist das Rotationswerkzeug 1 dafür angepasst, einen Innendurchmesser mit einer axialen Länge bis zu 400mm zu bearbeiten. Das dafür ausgelegte Rotationswerkzeug 1 kann die notwendigen große Zerspanungsleistungen erbringen und dennoch die geforderten engen Fertigungstoleranzen, wie nachstehend erläutert, einhalten.

Das Rotationswerkzeug 1 weist eine Trägerstruktur 10 in Form eines Topfes auf, welche Material im radial innenliegenden Bereich ausspart und dennoch eine sehr gute Drehmomentübertragung und Stabilität gewährleistet. Die Trägerstruktur 10 stellt volumenmäßig den größten Anteil an dem Rotationswerkzeug 1 dar und ist daher in Leicht-Bauweise, insbesondere Leichtmetall-Bauweise, ausgestaltet. Insbesondere kann die Trägerstruktur 10 als Material Aluminium wie beispielsweise AlZnMgCu1,5 (Werkstoffnummer 3.4365) aufweisen. Hierdurch wird sowohl ein Gewicht des Rotationswerkzeugs 1 als auch eine (Rotations-)Trägheit reduziert und eine Handhabung verbessert, um die Auswirkungen auf die Maßhaltigkeit der Bearbeitung zu verbessern. Aluminium als kostengünstiges Material für die Leicht-Bauweise hat jedoch den Nachteil, dass sein Wärmeausdehnungskoeffizient $\alpha_{Al}$ bei $24 \cdot 10^{-6} \frac{1}{K}$ liegt.

Die Trägerstruktur 10 trägt an einem in Fig. 1 gesehen linken Bereich die Schneiden 4. Die rotierenden Schneiden 4 mit hohem Spanabtrag erhitzen sich bei einer Werkstückbearbeitung stark und übertragen die entstehende Wärme auf benachbarte Komponenten des Rotationswerkzeugs 1. Die Trägerstruktur 10 alleinstehend würde sich bei einer spanenden Bearbeitung und einhergehender Erwärmung aufgrund der großen Abmessungen und des großen Schneidkreis-Durchmessers 8 so stark ausdehnen, dass je nach Temperaturdifferenz letztlich eine Maßhaltigkeit nicht mehr gewährleistet ist. Daher weist das Rotationswerkzeug 1 erfindungsgemäß eine Korsettstruktur 12 auf, welche einen die Schneide 4 tragenden Bereich 14 der Trägerstruktur 10 hinsichtlich einer thermischen Wärmeausdehnung beschränkt. Der tragende Bereich 4 ist ein Abschnitt der Trägerstruktur 10 in der Umgebung der Schneiden 4, welcher diese mittelbar oder unmittelbar trägt und die an der Schneide 4 bei einer spanenden Bearbeitung auftretenden Kräfte im Kraftfluss gesehen als vorgelagerter Bereich der Trägerstruktur 10 aufnimmt.

Das heißt, dass ein die Schneide 4 tragender Bereich 14, welcher ja letztlich entscheidend für den Schneidkreis-Durchmesser 8 ist und diesen im Wesentlichen vorgibt, durch die Korsettstruktur 12 in seiner Lage- bzw. Positionsänderung in radialer Richtung beschränkt wird. Während die Trägerstruktur 10 in dem die Schneide 4 tragenden Bereich 14 hinsichtlich einer geometrischen Änderung also beschränkt wird, kann sich die Trägerstruktur 10 im restlichen Bereich, welcher als Grundkörper 16 der Trägerstruktur 10 bezeichnet wird, thermisch ungehindert ausdehnen. Die Korsettstruktur 12 ist radial innerhalb der topfförmigen Trägerstruktur 10 in einem in Fig. 1 gesehen linken Abschnitt angeordnet. So befindet sich die Korsettstruktur 12 in unmittelbarer Nähe zu dem die Schneide 4 tragenden Bereich 14 bzw. in radialer Verlängerung zu den Schneiden 4. Die Trägerstruktur 10 wurde dabei auf die Korsettstruktur 12 aufgeschrumpft und weist bei Raumtemperatur eine Vorspannung zur Rotationachse A hin auf.

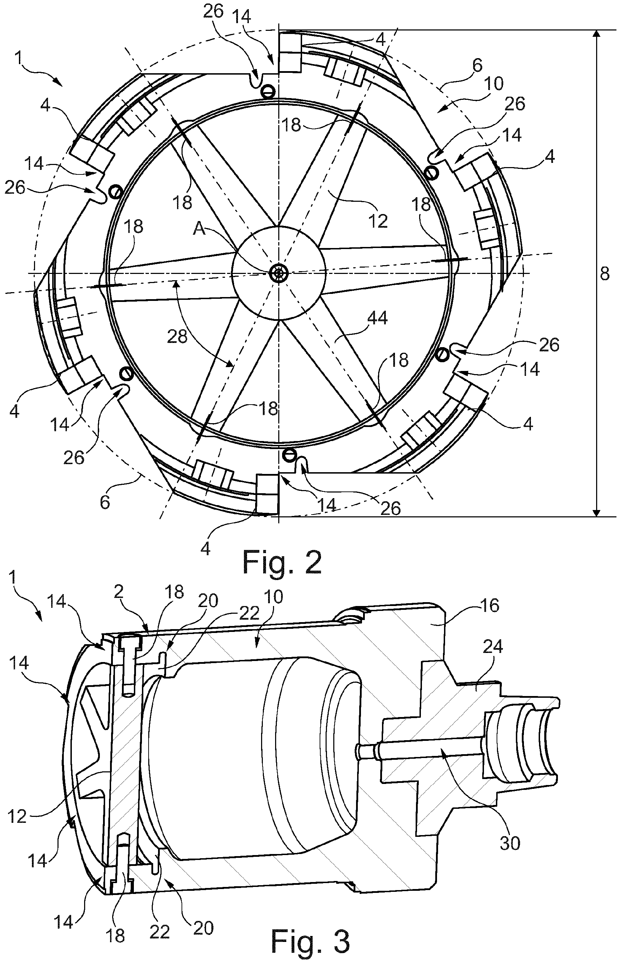

Die Korsettstruktur 12 ist in Form eines rotationssymmetrischen Sterns ausgebildet (siehe Fig. 2) und ist über Schrauben bzw. Schraubverbindungen 18 (schematisch dargestellt) in radialer Richtung, als Verbindungselement zwischen der Trägerstruktur 10 und der Korsettstruktur 12, mit der Trägerstruktur 10 starr verbunden. Jede Zacke 44 der sternförmigen Korsettstruktur 12 (siehe Fig. 2) liegt dabei an einem Innenumfang der Trägerstruktur 10 an und ist jeweils über eine Schraube 18 fest verbunden. Die Korsettstruktur 12 nimmt über die Schrauben 18 Zugspannungen in radialer Richtung auf, welche aufgrund unterschiedlicher thermischer Wärmeausdehnung auftreten können und "zieht" bzw. hält den die Schneide 4 tragenden Bereich 14 radial nach innen. So kommt lediglich eine thermische Ausdehnung des tragenden Bereichs 14, der "Wand" des Topfes der Trägerstruktur 10, zur Geltung, welche jedoch aufgrund der geringen "Wanddicke" des tragenden Bereichs 14 und der Proportionalität zu der Länge gering ist.

Die Korsettstruktur 12 ist in dieser Ausführungsform im Gesamten aus Invar(-Stahl) ausgeführt, der auch unter dem Namen "Invar 36" oder der Werkstoffnummer 1.3912 bekannt ist und eine ausdehnungsniedrige Legierung darstellt.

Seine Dichte liegt bei knapp $8\,\frac{g}{cm^3}$ und ist daher schwerer als die volumenmäßig größere Trägerstruktur 10 aus Aluminium. Allerdings ist der spezifische Wärmeausdehnungskoeffizient $\alpha_I = 2 \cdot 10^{-6}\,\frac{1}{K}$ der Korsettstruktur 12 deutlich geringer als der der Trägerstruktur 10. Da die Abmessung der Korsettstruktur 10 in radialer Richtung gegenüber der radialen Abmessung der Trägerstruktur 12 um ein vielfaches höher ist, gibt die Korsettstruktur 12 mit dem niedrigeren Wärmeausdehnungskoeffizienten maßgeblich die Wärmedehnung in radialer Richtung vor bzw. beschränkt durch die fixe Anbindung des tragenden Bereichs 14 über die Schrauben 18 den tragenden Bereich 14 der Trägerstruktur 10. So kann die Maßhaltigkeit selbst bei hohen Temperaturänderungen gewährleistet werden.

Der tragende Bereich 14 ist über einen radialelastischen Verbindungsabschnitt 20 an den Grundkörper 16 angebunden. Die Elastizität in radialer Richtung bzw. ein definiertes elastisches Spiel in radialer Richtung ermöglicht bis zu einem gewissen Grad eine Entkopplung einer geometrischen Veränderung des Grundkörpers 16 gegenüber dem tragenden Bereich 14 in radialer Richtung. Der Verbindungsabschnitt 20 ist in dieser Ausführungsform ein Teilabschnitt der Trägerstruktur 10 und weist eine Innenumfangsnut 22 auf Durch die Innenumfangsnut 22 wird dem Verbindungsabschnitt 20 Material entzogen und eine radialelastische Verformbarkeit begünstigt. Alternativ kann in dem Verbindungsbereich 20 nicht nur eine Innenumfangsnut 22 eingebracht sein, sondern zusätzlich zu dieser auch eine axialversetzte (in axialer Richtung der Rotationsachse A versetzte) weitere Außen- und/oder Innenumfangsnut ausgebildet sein. Hierdurch wird die Radialelastizität noch stärker ausgeprägt und über die geometrische Gestaltung des Verbindungsabschnitts (Anzahl Innen-und/oder Außenumfangsnuten, radiale Abmessung der Nuten, Breiten der Nuten) lässt sich eine an den jeweiligen Bedarf angepasste vorbestimmte Radialelastizität einstellen. Der radialelastische Verbindungsabschnitt 20 ist in dieser Ausführungsform einstückig ausgestaltet. Alternativ kann der radialelastische Verbindungsabschnitt 20 auch ein in der Trägerstruktur 10 ausgebildeter und definiert abgegrenzter Materialabschnitt mit einem geringeren E-Modul sein, um eine radialelastische Eigenschaft in dem Material selbst zu auszubilden. Ebenso ist es möglich Längsschlitze bzw. Ausfräsungen/Langlöcher in axialer Richtung in die Trägerstruktur 10 und insbesondere in den Grundkörper 16 einzubringen. Durch die Längsschlitze wird eine zuvor vollständig umfänglich geschlossene Ringstruktur der Trägerstruktur 10 in einzelne Abschnitte in Art einer Krone aufgespalten, welche in Umfangsrichtung durch die Längsschlitze beabstandet und in radialer Richtung elastischer sind.

Der topfförmige Grundkörper 16 der Trägerstruktur 10 ist mit einem Spannabschnitt 24, der in dieser Form als separate Komponente ausgebildet ist, verbunden und in diesem rotations- und axialfixiert. Der Spannabschnitt 24 dient dem Einspannen des Rotationswerkzeugs in eine entsprechende Werkzeugaufnahme (nicht dargestellt), welche das Rotationswerkzeug für eine spanende Bearbeitung positioniert und rotiert. Der Spannabschnitt kann eine solche Form haben, dass er über gängige Werkzeugaufnahmen an die entsprechende Spindel einer Werkzeugmaschine gekoppelt werden kann. Im gezeigten Fall ist der Spannabschnitt für eine sogenannte HSK-Schnittstelle gestaltet, die für eine innenliegende Kühl-/Schmiermittel Versorgung ausgestaltet sein kann. Konkret weist der Spannabschnitt 24 ein Kühl-/Schmiermittel Einspeiseröhrchen 32 auf.

Figur 2 ist eine Vorderansicht des erfindungsgemäßen Rotationswerkzeugs 1 der ersten Ausführungsform aus Fig. 1. In der Vorderansicht lässt sich die rotationssymmetrische Ausgestaltung des Rotationswerkzeugs 1 erkennen. Genauer gesagt ist das Rotationswerkzeug 1 in sechs Kreisabschnitte / Sektionen 28 gleicher Gestaltung aufgeteilt, welche jeweils in einem Winkel von 60° zueinander um die Rotationsachse A gedreht angeordnet sind und somit in Summe den gesamten Querschnitt des Rotationswerkzeugs 1 über 360° definieren.

Das Rotationswerkzeug 1 hat radial innenliegend die sternförmige Korsettstruktur 12 mit sechs Zacken 44 angeordnet, welche jeweils radial nach außen in den die Schneide 4 tragenden Bereich 14 zeigen. Insgesamt weist das Rotationswerkzeug 1, konform zu der Anzahl der Zacken 44 bzw. der Anzahl der Kreisabschnitte 28, sechs Schneiden 4 auf. Alternativ kann die Korsettstruktur 12 auch als kreisrunde Scheibe ausgestaltet sein. Die Trägerstruktur 10 weist in Umfangsrichtung gesehen zwischen den Schneiden 4 jeweils einen Einstich 26 bzw. eine Nut in axialer Richtung auf, der bzw. die als Spannungskerbe dient, um Spannungen abzuleiten. Die Korsettstruktur 12 weist insbesondere einen Durchmesser von über 160mm, besonders bevorzugt von über 200mm auf.

Figur 3 zeigt in einer perspektivischen Längsschnittansicht das Rotationswerkzeug 1 aus Fig. 1 und 2, wobei keine Schneiden 4 dargestellt sind. In dieser Ansicht sind die Korsettstruktur 12 und die Schrauben 18 sehr gut zu erkennen. Um die Rotationsachse A herum, weist das Rotationswerkzeug 1 im Bereich des Spannabschnitts 24 und einem unmittelbar anschließenden Bereich der Trägerstruktur 10 eine Durchgangsbohrung 30 für die Aufnahme einer Kühl-/Schmiermittel-Einspeiseröhrchen auf.

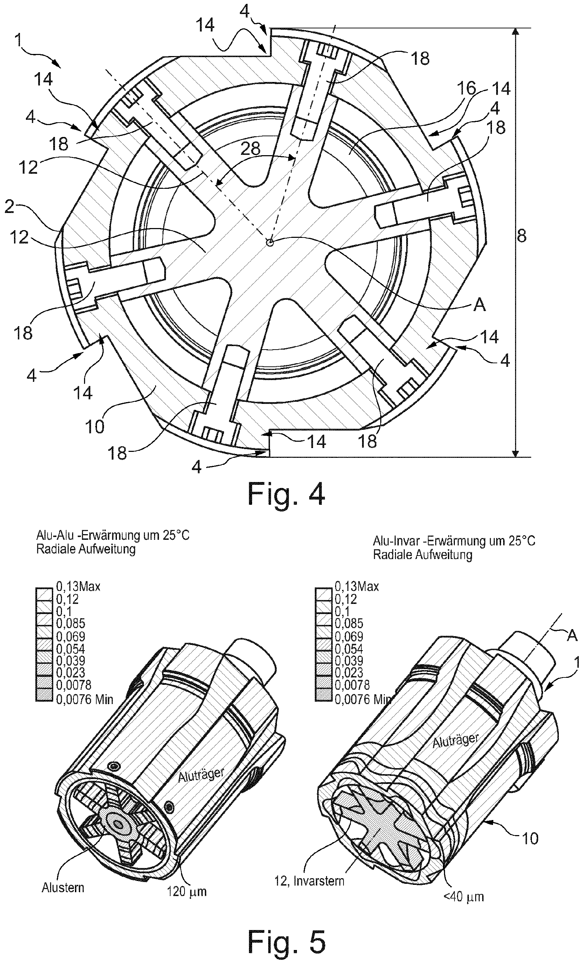

Figur 4 zeigt einen Querschnitt durch die sternförmige Korsettstruktur 12 mit den sechs schematisch dargestellten Schneiden 4 der sechs Kreisabschnitte 28. Die Köpfe der Schrauben 8 sind in die Trägerstruktur 10 eingelassen, bzw. schließen mit der Trägerstruktur 10 in radialer Richtung ab. Die Abmessung der sternförmigen Korsettstruktur 12 in axialer Richtung beträgt unter 15mm.

Figur 5 zeigt einen Vergleich einer Ausdehnung im tragenden Bereich 14 bzw. im Funktionsbereich der Schneiden 4 (nicht dargestellt) auf der Basis eines Finite-Elemente-Modells. Er verdeutlicht beispielhaft für eine Temperaturänderung von 25°C eine thermisch bedingte Formänderung des Werkzeugs und bringt zum Ausdruck, wie sich der Schneidkreis-Durchmessers 8 bei einem Rotationswerkzeug, das als radial innenliegende Struktur einen Stern aus Aluminium aufweist (linker Teil von Fig. 5), und bei einem erfindungsgemäßen Rotationswerkzeug mit Korsettstruktur aus Fig. 3 (rechter Teil von Fig. 5) ändert. Der Vergleich zeigt deutlich, dass bei dem erfindungsgemäßen Rotationswerkzeug 1 bei einer Erwärmung um 25°C eine radiale Aufweitung des die Schneide 4 tragenden Bereichs 14 und damit des Schneidkreis-Durchmessers 8, deutlich geringer ausfällt als bei dem Stern aus Aluminium. Die Figur 5 dient in Hauptsache der Veranschaulichung der qualitativen Veränderung der Wärmeausdehnung, wenn eine Korsettstruktur 12 aus Invar verwendet wird. Im speziellen vereinfachten Modell, bei dem der radialelastische Verbindungsabschnitt keiner weiteren Optimierung unterzogen worden ist und bei dem ein Nenndurchmesser der Trägerstruktur von über 220 mm verwendet wurde, reduziert sich eine lokale Aufweitung am vorderen Bereich von 120 $\mu$m auf unter 40$\mu$m. Die thermisch bedingte Lageveränderung der Schneiden 4 wird vorzugsweise dadurch minimiert, dass man der Trägerstruktur 10 im Vergleich zu der Korsettstruktur 12 eine solche Form gibt, dass die Korsettstruktur 12 wirksam in der Lage ist, die thermische Ausdehnung der Trägerstruktur 10, insbesondere dort, wo die Schneiden 4 positioniert sind, zu verringern.

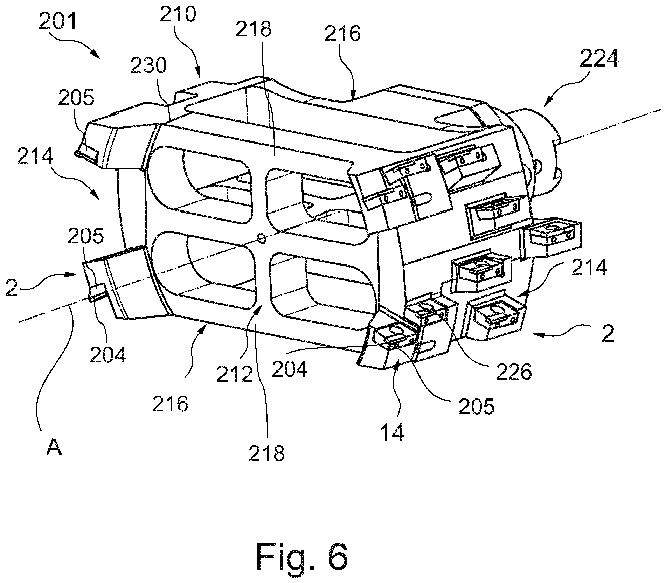

Fig. 6 zeigt eine weitere, bevorzugte Ausführungsform eines erfindungsgemäßen Rotationswerkzeugs 201. Auch in dieser Figur sind zur Vereinfachung der Beschreibung diejenigen Komponenten der Bauteile der oben beschriebenen anderen Ausführungsformen entsprechend mit ähnlichen Bezugszeichen versehen, denen eine "2" vorgestellt ist. Das Rotationswerkzeug 201 weist, konform zu den vorherigen Ausführungsformen, an seinem Außenumfang 2 wieder Schneiden 204 an Schneidkörpern 226 in Form von Schneideinsätzen auf, die in axial und radial einstellbaren Kassetten 205 gehalten sind. Die Schneiden 4 werden von zwei radial außen und sich diametral gegenüber liegenden tragenden Bereichen 214 einer Trägerstruktur 210 getragen. Die Trägerstruktur 210 ist in dieser Ausführungsform nicht in Form eines kreisrunden Topfes ausgeführt, sondern vielmehr in Form eines Topfes mit abgeschnittenen Seiten 216, welche sich bezüglich der Rotationsachse diametral gegenüberliegen. Die abgeschnittenen Seiten 216 dienen einer Verbesserung der Handhabung bei Logistik und Lagerung des Rotationswerkzeugs in den Bearbeitungszentren. Die Schneiden 4 des vorderen Abschnitts der tragenden Struktur 214 weisen radial innenliegend über eine Trennlinie 230 getrennt eine Korsettstruktur 212 aus Invar in sternförmiger Struktur auf, die mit den zwei tragenden Bereichen 214 verbunden sind. Konkret ist die sternförmige Struktur in axialer Richtung gesehen als Gitter ausgestaltet bzw. weist neben einem "Haupt-Stern" im Zentrum zwei weitere Streben 218 auf, welche die beiden tragenden Bereiche 214 miteinander verbinden. Durch die Korsettstruktur 212 wird eine thermische Ausdehnung der tragenden Bereiche 214 in einem vorderen Abschnitt der Trägerstruktur 210 in radialer Richtung beschränkt. Durch die in Seitenansicht U-förmige Geometrie der Trägerstruktur 210 mit radial innenliegender Korsettstruktur 212 ist die Trägerstruktur 210 in Leicht-Bauweise ausgestaltet.

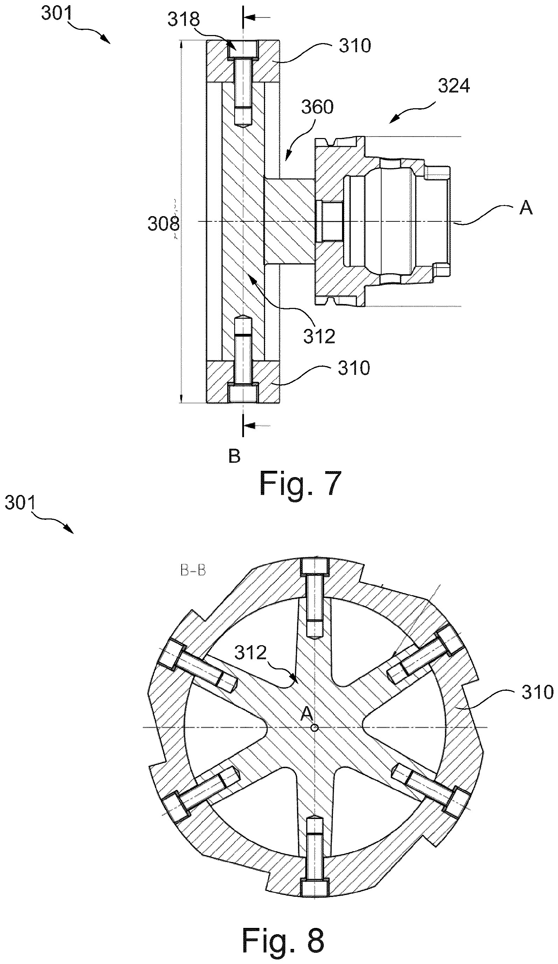

Figur 7 und Figur 8 zeigen schließlich eine weitere Ausführungsform eines Rotationswerkzeugs 301 zur Bearbeitung großer Innendurchmesser. Auch in dieser Variante sind Elemente, die Komponenten der zuvor beschrieben Ausführungsformen entsprechen, mit ähnlichen Bezugszeichen versehen, denen eine "3" vorangestellt ist.

Hier ist die Trägerstruktur 310 lediglich als Leichtmetall-Ring, beispielsweise als Aluminiumring, ausgestaltet, der auf einer Korsettstruktur 312 sitzt und die Schneiden 304 trägt. Die Korsettstruktur 312 kann beliebige Formgebung haben, beispielsweise auch als Stern oder Scheibe ausgebildet sein. Als Material für die Korsettstruktur 312 findet wieder ein Material mit geringer Wärmeausdehnung Anwendung, wie beispielsweise die zuvor beschrieben Materialien. Bei dieser Variante erfolgt die Drehmomentübertragung von dem Spannabschnitt 324 zu der Korsettstruktur 312 über einen lediglich schematisch angedeuteten Wellenabschnitt 360, der hinsichtlich seiner Dimensionierung und Geometrie frei gestaltbar ist. Dieser Wellenabschnitt 360 kann auch eine weitere (nicht dargestellte) Korsettstruktur für einen weiteren mit Schneiden bestückten Leichtmetallring tragen. In diesem Fall ist es von Vorteil, wenn der Wellenabschnitt 360 ebenfalls aus einem Material mit einem geringen Wärmeausdehnungskoeffizienten, wie beispielsweise Invar, gestaltet ist.

Die Verbindung zwischen der Korsettstruktur 312, und der als Leichtmetall-Ring ausgestalteten Trägerstruktur 310 kann in der gleichen Weise erfolgen, wie dies unter Bezug auf die Ausführungsformen nach Figuren 1 bis 5 beschrieben ist. Zusätzlich kann der Leichtmetall-Ring auf die Korsettstruktur 312 aufgeschrumpft sein, mit dem Vorteil, dass bei einer Erwärmung des Werkzeugs die thermisch bedingte Lageänderung der auf dem Leichtmetallring sitzenden Schneiden (nicht dargestellt) am Außenumfang des Leichtmetall-Rings zunächst um den Abbau der Schrumpfdehnung teilweise kompensiert wird.

Der besondere Vorteil dieser Ausführungsform ist darin zu sehen, dass die Schneiden (nicht dargestellt) des Rotationswerkzeugs 301 über den Umfang beliebig verteilt werden können, unabhängig von der geometrischen Form der Korsettstruktur 312. Auch kann ein Gewicht weiter verringert werden.

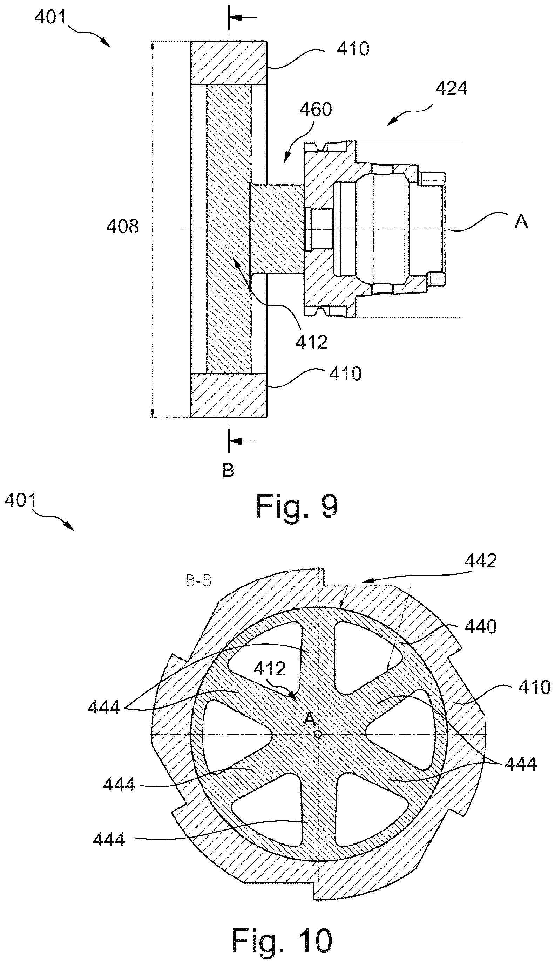

Die Ausführungsform eines Rotationswerkzeugs 401 gemäß Fig. 9 und Fig. 10, bei denen wieder ähnliche Bezugszeichen verwendet werden, denen eine "4" vorangestellt ist, unterscheidet sich von der Variante gemäß Fig. 7 und Fig. 8 dadurch, dass die radialfeste Verbindung zwischen Trägerstruktur 410 und Korsettstruktur 412 rein kraftschlüssig durch Aufschrumpfen der Trägerstruktur 410 auf die Korsettstruktur 412 erfolgt. Eine weitere Abwandlung ist, dass die Korsettstruktur nicht als Stern, sondern ähnlich einer Felge mit einem umlaufenden, geschlossenen Stützring 440 gestaltet ist, so dass sich die Trägerstruktur 410 über den gesamten Umfang auf der Korsettstruktur 412 abstützt.

Die (nicht dargestellten) Schneiden des Werkzeugs sind über den Umfang verteilt. Es sind auch Abflachungen 442 vorgesehen, auf denen die Schneiden bzw. Kassetten fixiert werden. Die Abflachungen 442 werden vorzugsweise dort vorgesehen, wo die Korsettstruktur 412 den größten Einfluss auf die Beschränkung der thermischen Dehnung hat. Dies ist im gezeigten Ausführungsbeispiel der Bereich nahe den Speichen 444 der Korsettstruktur 412.

Vorzugsweise wird die Abflachung 442 möglichst nahe an den Verbindungsbereich bzw. die Kontaktfläche zwischen der Korsettstruktur 412 und der Trägerstruktur 410 gelegt.

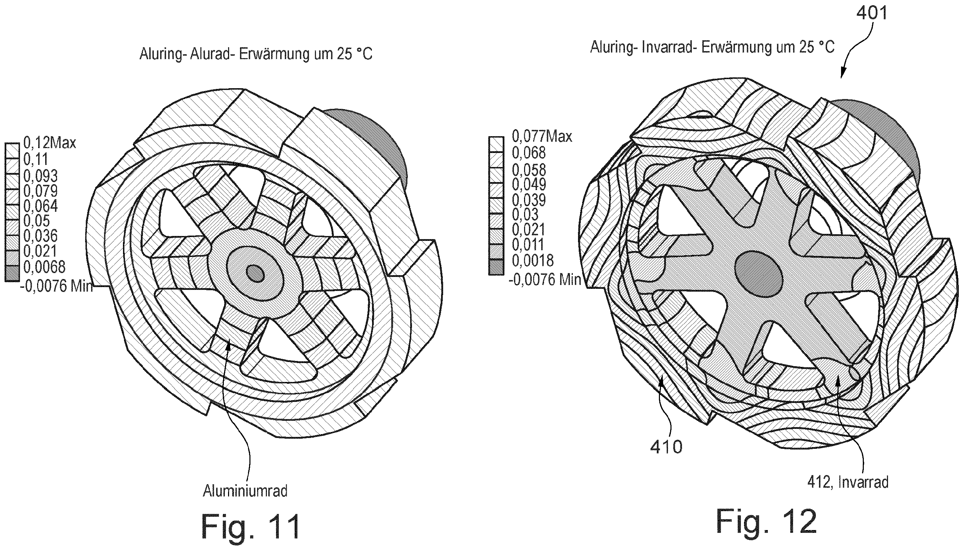

In den Fig. 11 und 12 werden thermisch bedingte Ausdehnungen eines anmeldungsgemäßen Werkzeugs (Fig. 12), wie es in den Figuren 9 und 10 dargestellt ist, den thermischen Verformungen eines vollständig aus Leichtmetall hergestellten Werkzeugs (Fig. 11) gegenübergestellt. In beiden Fällen ist ein Leichtmetallring, hier ein Aluminiumring, auf eine Korsettstruktur in Form eines Rades bzw. einer Felge aufgeschrumpft. Über die Markierung/Schraffur lässt sich in Verbindung mit der Markierungsskala die thermisch bedingte Ausdehnung der einzelnen Bereiche bei einer Temperaturerhöhung von 25°C erkennen. Wie ersichtlich, dehnt sich der Aluminiumring gemäß Fig. 11 an dem Außenumfang um 120 $\mu$m, während sich in der anmeldungsgemäßen Ausgestaltung die radiale Verlagerung des äußersten Abschnitts des Aluminiumrings (Trägerstruktur) auf unter 40 $\mu$m beschränken lässt. Außerdem ist erkennbar, dass diese Beschränkung der radialen Ausdehnung umso geringer ist, je näher der maßgebliche Punkt zur Rotationsachse liegt. Damit kann die thermisch bedingte Verlagerung einer von Leichtmetallring getragenen Schneide bei Erhöhung der Werkzeugtemperatur dann noch weiter herabgesetzt werden, wenn die Schneide, beispielsweise in einer Kassette sitzt, die auf der Abflachung 442 des Aluminiumrings befestigt ist.

Das in den Figuren 11 und 12 gezeigte Resultat lässt sich qualitativ vergleichbar auch dann erzielen, wenn anstelle des Rades bzw. der Felge ein Stern bzw. eine sternförmige Korsettstruktur verwendet wird, auf welche die Trägerstruktur aufgeschrumpft ist.

Selbstverständlich sind auch Abwandlungen von der zuvor beschriebenen Ausführungsform möglich, ohne den Schutzumfang der Erfindung zu verlassen.

Beispielsweise muss das Rotationswerkzeug nicht rotationssymmetrisch mit gleichen Sektionen ausgestaltet sein, sondern kann auch ungleich geteilt sein und unterschiedliche Kreisabschnitte / Sektionen aufweisen, welche unterschiedliche Winkel zueinander um die Rotationsachse A aufweisen. Beispielsweise können eine erste Sektion mit einem Winkel von 25° um die Rotationsachse A, eine von der ersten Sektion unterschiedlich ausgestaltete zweite Sektion mit einem Winkel von 25° und eine dritte Sektion mit einem Winkel von 130° je eine Hälfte des Rotationswerkzeugs definieren. Somit definieren die Sektionen in Summe wieder den gesamten Querschnitt des Rotationswerkzeugs 1 über 360° mit (25°+25°+130°)+(25°+25°+130°).

Auch kann statt Invar oder einer Titanlegierung allgemein ein beliebiges Material mit einem geringen thermischen Ausdehnungskoeffizienten (von unter 10E-6 1/K) verwendet werden.

Das Rotationswerkzeug kann insgesamt oder modular generativ bzw. additiv gefertigt werden. Beispielsweise kann das Rotationswerkzeug abschnittsweise unterschiedliche Materialien aufweisen, die beispielsweise mittels (Metall-)Lasersintern aufgebaut und miteinander verbunden werden. In einer Variante kann die Trägerstruktur und/oder die Korsettstruktur additiv mit gleichen oder unterschiedlichen Materialien, wie beispielsweise Invar oder einer Titanlegierung, gefertigt und miteinander verbunden werden.

Bezugszeichen

| | |
|---|---|
| 1; 201; 301; 401 | Rotationswerkzeug |
| 2 | Außenumfang |
| 4; 204 | Schneide |
| 6 | Schneidkreis |
| 8 | Schneidkreis-Durchmesser |
| 10; 210; 310; 410 | Trägerstruktur |
| 12; 212; 312; 412 | Korsettstruktur |
| 14; 214; 314 | Tragender Bereich |
| 16 | Grundkörper |
| 18 | Schraube |
| 20 | Verbindungsabschnitt |
| 22 | Innenumfangsnut |
| 24; 224; 324; 424 | Spannabschnitt |
| 26 | Einstich |
| 28 | Kreisabschnitt |
| 30 | Durchgangsbohrung |
| 32 | Einspeiseröhrchen |
| 205 | Kassetten |
| | |
| 226 | Schneidkörper |
| 360 | Wellenabschnitt |
| 440 | Stützring |
| 442 | Abflachung |
| 44; 344; 444 | Speiche / Zacke |
| A | Rotationsachse |

**Patentansprüche**

1. Rotationswerkzeug (1; 201; 301; 401) zur spanenden Bearbeitung von großen Innendurchmessern, an dessen Außenumfang (2) zumindest eine Schneide (4; 204) angeordnet ist, mit einer Trägerstruktur (10; 210; 310; 410), welche einen tragenden Bereich (14; 214) aufweist, der die Schneide (4; 204) mittelbar oder unmittelbar trägt, und einen Spannabschnitt (24; 224; 324; 424) zur Ankopplung an eine Werkzeugaufnahme, wobei die Trägerstruktur (10; 210; 310; 410) in Leicht-Bauweise ausgestaltet ist und der die Schneide (4; 204) mittelbar oder unmittelbar tragende Bereich (14; 214) der Trägerstruktur (10; 210; 310; 410) hinsichtlich einer thermischen Wärmeausdehnung durch eine Korsettstruktur (12; 212; 312; 412) beschränkt ist, wobei die Korsettstruktur (12; 212; 312; 412) radial innerhalb der Trägerstruktur (10; 210; 310; 410) angeordnet und mit der Trägerstruktur (10; 210; 310; 410) verbunden ist, **dadurch gekennzeichnet, dass** die Korsettstruktur (12; 212; 312; 412) eine thermische Wärmeausdehnung des die Schneide (4; 204) tragenden Bereichs (14; 214) der Trägerstruktur (10; 210; 310; 410) vorgibt.

2. Rotationswerkzeug (1; 201; 301; 401) nach Anspruch 1, **dadurch gekennzeichnet, dass** die Korsettstruktur (12; 212; 312; 412) einen Wärmeausdehnungskoeffizienten von unter 10E-6 1/K, besonders bevorzugt von unter 2E-6 1/K, im Temperaturbereich von 0 bis 100°C aufweist.

3. Rotationswerkzeug (1; 201; 301; 401) nach Anspruch 1 oder 2, **dadurch gekennzeichnet, dass** die Korsettstruktur (12; 212; 312; 412) als Material Invar und/oder Titan und/oder Nickel und/oder Kohlenstofffaserverstärkten Kunststoff aufweist.

4. Rotationswerkzeug (1; 201; 301; 401) nach einem der vorangegangenen Ansprüche, **dadurch gekennzeichnet, dass** die Korsettstruktur (12; 212; 312; 412) rotationssymmetrisch zu einer Rotationsachse (A) des Rotationswerkzeugs (1; 201; 301; 401) ausgebildet ist.

5. Rotationswerkzeug (1; 201; 301; 401) nach einem der vorangegangenen Ansprüche, **dadurch gekennzeichnet, dass** die Trägerstruktur (10; 110; 210; 310; 410) eine Dichte von unter 4 g/cm^3 und/oder einen Wärmeausdehnungskoeffizienten von über 15E-6 1/K im Temperaturbereich von 0 bis 100°C aufweist.

6. Rotationswerkzeug (1; 201; 301; 401) nach einem der vorangegangenen Ansprüche, **dadurch gekennzeichnet, dass** das Rotationswerkzeug (1; 101; 201; 301; 401) dafür angepasst ist, einen Innendurchmesser von über 200mm und/oder einen Innendurchmesser mit einer Länge bis zu 400mm zu bearbeiten.

7. Rotationswerkzeug (1; 201; 301; 401) nach Anspruch 1, **dadurch gekennzeichnet, dass** die zumindest eine Schneide (4; 204) unmittelbar an dem tragenden Bereich (14; 214) der Trägerstruktur (10; 210; 310; 410) oder an einem von dem tragenden Bereich (14; 214) getragenen Schneidkörper (226) ausgebildet ist.

8. Rotationswerkzeug (201) nach Anspruch 7, **dadurch gekennzeichnet, dass** der Schneidkörper (226) in einer axial und/oder radial einstellbaren Kassette (205) gehalten ist.

9. Rotationswerkzeug (1; 201; 301; 401) nach einem der vorangegangenen Ansprüche, **dadurch gekennzeichnet, dass** die Korsettstruktur (12; 212; 312; 412) eine bezüglich einer Rotationsachse (A) des Rotationswerkzeugs (1; 201; 301; 401) scheibenförmige oder sternförmige Struktur aufweist.

10. Rotationswerkzeug (1) nach einem der vorangegangenen Ansprüche, **dadurch gekennzeichnet, dass** der die Schneide (4) tragende Bereich (14) über einen radialelastischen Verbindungsabschnitt (20) an einen Grundkörper (16) der Trägerstruktur (10) angebunden ist, wobei der Grundkörper (16) der Trägerstruktur (10) vorzugsweise die Form eines Topfes hat und der radialelastische Verbindungsabschnitt (20) der Trägerstruktur (10) insbesondere eine Innenumfangsnut (22) und/oder eine Außenumfangsnut aufweist.

11. Rotationswerkzeug (1; 201; 301; 401) nach Anspruch 3, **dadurch gekennzeichnet, dass** bei Kohlenstofffaserverstärktem Kunststoff als Material der Korsettstruktur (12; 212; 312; 412) die Ausrichtungen der Kohlenstofffasern in radialer Richtung gelegt werden, so dass in Richtung der Kohlenstofffasern eine Wärmeausdehnung beschränkt wird.

12. Rotationswerkzeug (1; 201; 301; 401) nach einem der vorangegangenen Ansprüche, **dadurch gekennzeichnet, dass** in radialer Richtung die Abmessung der Korsettstruktur (12; 212; 312; 412) um ein Vielfaches größer als die Abmessung des die Schneide (4; 204) tragenden Bereichs (14; 214) ist.

13. Rotationswerkzeug (1; 201; 301) nach einem der vorangegangenen Ansprüche, **dadurch gekennzeichnet, dass** die Korsettstruktur (12; 212; 312) über zumindest eine Schraubenverbindung in radialer Richtung mit der Trägerstruktur (10; 210; 310) verbunden ist.

14. Rotationswerkzeug (401) nach einem der Ansprüche 1 bis 12, **dadurch gekennzeichnet, dass** die Trägerstruktur (410) auf die Korsettstruktur (412) aufgeschrumpft und so kraftschlüssig mit dieser verbunden ist.

## Claims

1. A rotary tool (1; 201; 301; 401) for cutting large inside diameters at the outer circumference (2) of which at least one cutting edge (4; 204) is arranged, comprising a support structure (10; 210; 310; 410) which includes a supporting area (14; 214) which indirectly or directly supports the cutting edge (4; 204), and comprising a chucking portion (24; 224; 324; 424) for coupling to a tool holder, wherein the support structure (10; 210; 310; 410) is designed in lightweight construction and the area (14; 114; 214) of the support structure (10; 210; 310; 410) indirectly or directly supporting the cutting edge (4; 204) is limited with respect to thermal expansion by a corset structure (12; 212; 312; 412), wherein the corset structure (12; 212; 312; 412) is arranged radially inside the support structure (10; 210; 310; 410) and is connected to the support structure (10; 210; 310; 410), **characterized in that** the corset structure (12; 212; 312; 412) predetermines a thermal expansion of the area (14; 214) of the support structure (10; 210; 310; 410) supporting the cutting edge (4; 204).

2. The rotary tool (1; 201; 301; 401) according to claim 1, **characterized in that** the corset structure (12; 212; 312; 412) has a thermal expansion coefficient of less than 10E-6 1/K, especially preferred of less than 2E-6 1/K, within the temperature range from 0 to 100°C.

3. The rotary tool (1; 201; 301; 401) according to claim 1 or 2, **characterized in that** the corset structure (12; 212; 312; 412) includes Invar and/or titanium and/or nickel and/or carbon-fiber reinforced plastic as a material.

4. The rotary tool (1; 201; 301; 401) according to one of the preceding claims, **characterized in that** the corset structure (12; 212; 312; 412) is formed to be rotationally symmetric to an axis of rotation (A) of the rotary tool (1; 201; 301; 401).

5. The rotary tool (1; 201; 301; 401) according to one of the preceding claims, **characterized in that** the support structure (10; 110; 210; 310; 410) has a density of less than 4 g/cm^3 and/or a thermal expansion coefficient of more than 15E-6 1/K within the temperature range from 0 to 100°C.

6. The rotary tool (1; 201; 301; 401) according to one of the preceding claims, **characterized in that** the rotary tool (1; 101; 201; 301; 401) is adapted for machining an inside diameter of more than 200mm and/or an inside diameter having a length of up to 400mm.

7. The rotary tool (1; 201; 301; 401) according to claim 1, **characterized in that** the at least one cutting edge (4; 204) is formed directly at the supporting area (14; 204) of the support structure (10; 210; 310; 410) or at a cutting member (226) supported by the supporting area (14; 214).

8. The rotary tool (201) according to claim 7, **characterized in that** the cutting member (226) is held in an axially and/or radially adjustable cartridge (205).

9. The rotary tool (1; 201; 301; 401) according to one of the preceding claims, **characterized in that** the corset structure (12; 212; 312; 412) has a diskshaped or star-shaped structure with respect to an axis of rotation (A) of the rotary tool (1; 201; 301; 401).

10. The rotary tool (1) according to one of the preceding claims, **characterized in that** the area (14) supporting the cutting edge (4) is connected to a base (16) of the support structure (10) via a radially elastic connecting portion (20), wherein the base (16) of the support structure (10) is preferably pot-shaped and the radially elastic connecting portion (20) of the support structure (10) includes an inner circumferential groove (22) and/or an outer circumferential groove.

11. The rotary tool (1; 201; 301; 401) according to claim 3, **characterized in that,** in the case of carbon-fiber reinforced plastic as the material of the corset structure (12; 212; 312; 412), the orientations of the carbon fibers are laid in the radial direction, so that thermal expansion is limited in the direction of the carbon fibers.

12. The rotary tool (1; 201; 301; 401) according to one of the preceding claims, **characterized in that,** in the radial direction, the dimension of the corset structure (12; 212; 312; 412) is many times larger than the dimension of the area (14; 214) supporting the cutting edge (4; 204).

13. The rotary tool (1; 201; 301) according to one of the preceding claims, **characterized in that** the corset structure (12; 212; 312) is connected to the support structure (10; 210; 310) in the radial direction via at least one screw connection.

14. The rotary tool (401) according to one of claims 1 to 12, **characterized in that** the support structure (410) is shrunk onto the corset structure (412) and thus connected to it in a force-fitting manner.

**Revendications**

1. Outil de rotation (1 ; 201 ; 301 ; 401) pour l'usinage par enlèvement de copeaux de grands diamètres intérieurs, au niveau de la périphérie extérieure duquel (2) au moins une lame (4 ; 204) est agencée, avec une structure porteuse (10 ; 210 ; 310 ; 410) qui présente une zone porteuse (14 ; 214) qui porte directement ou indirectement la lame (4 ; 204), et une section de serrage (24 ; 224 ; 324 ; 424) pour le couplage à un logement d'outil, dans lequel la structure porteuse (10 ; 210 ; 310 ; 410) est conçue en construction légère et la zone (14 ; 214) portant directement ou indirectement la lame (4 ; 204) de la structure porteuse (10 ; 210 ; 310 ; 410) est limitée par une structure de corset (12 ; 212 ; 312 ; 412) en ce qui concerne une dilatation thermique, dans lequel la structure de corset (12 ; 212 ; 312 ; 412) est agencée radialement à l'intérieur de la structure porteuse (10 ; 210 ; 310 ; 410) et est reliée à la structure porteuse (10 ; 210 ; 310 ; 410), **caractérisé en ce que** la structure de corset (12 ; 212 ; 312 ; 412) prédéfinit une dilatation thermique de la zone (14 ; 214) portant la lame (4 ; 204) de la structure porteuse (10 ; 210 ; 310 ; 410).

2. Outil de rotation (1 ; 201 ; 301 ; 401) selon la revendication 1, **caractérisé en ce que** la structure de corset (12 ; 212 ; 312 ; 412) présente un coefficient de dilatation thermique de moins de 10E-6 1/K, le plus préférentiellement de moins de 2E-6 1/K, dans la plage de températures de 0 à 100 °C.

3. Outil de rotation (1 ; 201; 301 ; 401) selon la revendication 1 ou 2, **caractérisé en ce que** la structure de corset (12 ; 212 ; 312 ; 412) présente comme matériau de l'invar et/ou du titane et/ou du nickel et/ou de la matière plastique renforcée par des fibres de carbone.

4. Outil de rotation (1 ; 201 ; 301 ; 401) selon l'une quelconque des revendications précédentes, **caractérisé en ce que** la structure de corset (12 ; 212 ; 312 ; 412) est réalisée de manière symétrique en rotation par rapport à un axe de rotation (A) de l'outil de rotation (1 ; 201 ; 301 ; 401).

5. Outil de rotation (1 ; 201 ; 301 ; 401) selon l'une quelconque des revendications précédentes, **caractérisé en ce que** la structure porteuse (10 ; 110 ; 210 ; 310 ; 410) présente une densité de moins de 4 g/cm^3 et/ou un coefficient de dilatation thermique de plus de 15E-6 1 ZK dans la plage de températures de 0 à 100 °C.

6. Outil de rotation (1 ; 201 ; 301 ; 401) selon l'une quelconque des revendications précédentes, **caractérisé en ce que** l'outil de rotation (1 ; 101 ; 201 ; 301 ; 401) est adapté pour usiner un diamètre intérieur de plus de 200 mm et/ou un diamètre intérieur avec une longueur allant jusqu'à 400 mm.

7. Outil de rotation (1 ; 201 ; 301 ; 401) selon la revendication 1, **caractérisé en ce que** l'au moins une lame (4 ; 204) est réalisée directement au niveau de la zone porteuse (14 ; 214) de la structure porteuse (10 ; 210 ; 310 ; 410) ou au niveau d'un corps de coupe (226) porté par la zone porteuse (14 ; 214).

8. Outil de rotation (201) selon la revendication 7, **caractérisé en ce que** le corps de lame (226) est maintenu dans une cassette (205) réglable axialement et/ou radialement.

9. Outil de rotation (1 ; 201 ; 301 ; 401) selon l'une quelconque des revendications précédentes, **caractérisé en ce que** la structure de corset (12 ; 212 ; 312 ; 412) présente une structure en forme de disque ou en forme d'étoile par rapport à un axe de rotation (A) de l'outil de rotation (1 ; 201 ; 301 ; 401).

10. Outil de rotation (1) selon l'une quelconque des revendications précédentes, **caractérisé en ce que** la zone (14) portant la lame (4) est reliée par le biais d'une section de liaison (20) radialement élastique à un corps de base (16) de la structure porteuse (10), dans lequel le corps de base (16) de la structure porteuse (10) présente de préférence la forme d'un pot et la section de liaison (20) radialement élastique de la structure porteuse (10) présente en particulier une rainure périphérique intérieure (22) et/ou une rainure périphérique extérieure.

11. Outil de rotation (1 ; 201 ; 301 ; 401) selon la revendication 3, **caractérisé en ce que** , en cas de matière plastique renforcée par des fibres de carbone utilisée comme matériau de la structure de corset (12 ; 212 ; 312 ; 412), les orientations des fibres de carbone sont placées dans le sens radial de sorte qu'une dilatation thermique soit limitée en direction des fibres de carbone.

12. Outil de rotation (1 ; 201 ; 301 ; 401) selon l'une quelconque des revendications précédentes, **caractérisé en ce que** la dimension de la structure de corset (12 ; 212 ; 312 ; 412) dans le sens radial est bien plus grande que la dimension de la zone (14 ; 214) portant la lame (4 ; 204).

13. Outil de rotation (1 ; 201; 301) selon l'une quelconque des revendications précédentes, **caractérisé en ce quela** structure de corset (12 ; 212 ; 312) est reliée par le biais d'au moins une liaison vissée dans le sens radial à la structure porteuse (10 ; 210 ; 310).

14. Outil de rotation (401) selon l'une quelconque des revendications 1 à 12, **caractérisé en ce que** la structure porteuse (410) est frettée sur la structure de corset (412) et reliée ainsi à force à celle-ci.

EP 3 566 802 B1

Fig. 1

14

EP 3 566 802 B1

Fig. 2

Fig. 3

Fig. 4

Fig. 5

Fig. 6

Fig. 7

Fig. 8

401

410

460

424

408

A

412

410

B

# Fig. 9

401

B-B

442

440

412

410

444

A

444

444

444

# Fig. 10

Aluring- Invarrad- Erwärmung um 25 °C

0,077Max
0,068
0,058
0,049
0,039
0,03
0,021
0,011
0,0018
-0,0076 Min

401

412, Invarrad

410

Fig. 12

Aluring- Alurad- Erwärmung um 25 °C

0,12Max
0,11
0,093
0,079
0,064
0,05
0,036
0,021
0,0068
-0,0076 Min

Aluminiumrad

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5605420 A